# EUROPEAN PATENT APPLICATION

(11) **EP 1 764 305 A2**
(43) Date of publication of application: **21.03.2007**
(21) Application number: 06120573.8
(22) Date of filing: 13.09.2006
(51) Int. Cl.: B64D 41/00, B64D 27/16

(54) **Auxiliary power unit case flange to plate adapter**

(30) Priority: 14.09.2005 US 227674
(71) Applicant: Honeywell International Inc., Morristown, New Jersey 07962 (US)
(72) Inventor: Michalski, Joseph W, Jr, Phoenix, KS 85048 (US); Asplund, Kyle D, Wichita, KS 67209 (US)
(74) Representative: Haley, Stephen

(57) **Abstract**

A fireproof mount adapter (140) is provided that is configured to couple a case flange (128) of an auxiliary power unit (100) to a stud adapter (138), the case flange (128) having a plurality of spaced apart fastener openings formed therethrough. The mount adapter (140) comprises a first rib (142) and a mount plate (144). The first rib (142) has a portion configured to extend substantially parallel to at least a portion of the case flange (128) and includes a plurality of openings (146) formed therethrough. The openings (146) are disposed in a pattern such that at least selected ones correspond to one or more of the case flange fastener openings. The mount plate (144) has a first side (147) integrally formed on the first rib (142), a second side (148), and a plurality of aperture (150) extending therebetween. The first rib (142) and the mount plate (144) comprise fireproof material.

## Description

The present invention relates to a case flange on an auxiliary power unit and, more particularly, to an adapter that serves as an interface between the case flange and a support structure for the auxiliary power unit.

Auxiliary power units ("APU") are used in aircraft to provide electrical power and compressed air to various aircraft systems during both ground and in flight operations. For example, when an aircraft is on the ground, the APU may provide electrical power to the electrical system, and compressed air to the environmental control systems, air drive hydraulic pumps, and starting air for the main engines.

Typically, an APU is located in the aft section of the aircraft at or near the tailcone section. The APU may be mounted within the tailcone section via struts that extend between the APU and airframe structure within the tailcone. In many cases, a strut adapter may be used to couple the struts to an APU attachment interface, such as a gearbox pad. To meet weight restrictions, the APU attachment interface, and various other parts of the APU are typically constructed from lightweight materials, such as aluminum.

Recently, regulatory authorities have implemented regulations related to improved fire-resistance. To implement these new regulations, many aircraft may need to include more file-resistant parts. Consequently, various solutions have been proposed to reconfigure various sections af the aircraft, including the above-identified APU mount structure. One of the proposed solutions includes shielding the APU attachment interface with a fireproof material and changing the material from which the APU attachment interface is constructed. However, because the fireproof material typically weighs more than previously used lightweight material, the overall weight of the aircraft may undesirably increase. Additionally, the material change or addition of material may increase the cost of manufacturing the aircraft.

Thus, there is a need for an APU mount system that is fireproof. Additionally, it is desirable for the system to be lightweight. Moreover, it is desirable for the system to be relatively inexpensive to implement.

The present invention provides a mount adapter configured to couple a case flange of an auxiliary power unit to a stud adapter, the case flange having a plurality of spaced apart fastener openings formed therethrough. The mount adapter comprises a first rib and a mount plate. The first rib has a portion configured to extend substantially parallel to at least a portion of the case flange and includes a plurality of openings formed therethrough. The openings are disposed in a pattern such that at least selected ones correspond to one or more of the case flange fastener openings. The mount plate has a first side integrally formed on the first rib, a second side, and a plurality of apertures extending therebetween. The first rib and the mount plate comprise fireproof material.

In one embodiment, and by way of example only, the mount adapter includes a first and a second rib and a mount plate. The first rib is configured to extend substantially parallel to at least a portion of the case flange, and includes a plurality of openings formed therethrough and disposed in a pattern such that at least selected ones correspond to one or more of the case flange fastener openings. The second rib is disposed substantially parallel to the first rib, and includes a plurality of openings formed therethrough and disposed in a pattern such that at least selected ones correspond to one or more of the case flange fastener openings. The mount plate is disposed between and integrally formed with the first rib and the second rib, and has a first side, a second side, and a plurality of apertures extending therebetween. The first rib, the second rib, and the mount plate comprise fireproof material.

In still another embodiment, and by way of example only, a mount system is provided for coupling a strut and an auxiliary power unit, where the auxiliary power unit includes a case flange having a plurality of spaced apart fastener openings formed therethrough. The system comprises a finger adapter, a mount adapter, and a stud adapter. The finger adapter has a first section and a second section, where the first section is configured to couple to the strut. The mount adapter is coupled to the finger adapter second section and comprises a first rib and a mount plate. The first rib is configured to extend substantially parallel to at least a portion of the case flange, and includes a plurality of openings formed therethrough and disposed in a pattern such that at least selected ones correspond to one or more of the case flange fastener openings. The mount plate has a first side integrally formed on the first rib, a second side, and a plurality of apertures extending therebetween. The first rib and the mount plate comprise fireproof material. The stud adapter is disposed between the finger adapter and the mount adapter.

Other independent features and advantages of the preferred mount system will become apparent from the following detailed description, taken in conjunction with the accompanying drawings which illustrate, by way of example, the principles of the invention.

FIG. 1 is an isometric view of an exemplary auxiliary power unit installed in an aircraft tailcone;

FIG. 2 is an isometric view of an auxiliary power unit on which an exemplary mount adapter is disposed;

FIG. 3 is a close up view of the exemplary mount adapter depicted in FIG. 2;

FIG. 4 is a cross-sectional view of another exemplary mount adapter

FIG. 5 is an isometric view of another exemplary mount adapter; and

FIG. 6 is a cross-sectional view of the exemplary mount adapter depicted in FIG. 5 taken along line 6-6.

The following detailed description of the invention is merely exemplary in nature and is not intended to limit the invention or the application and uses of the invention. Furthermore, there is no intention to be bound by any theory presented in the preceding background of the invention or the following detailed

### description of the invention.

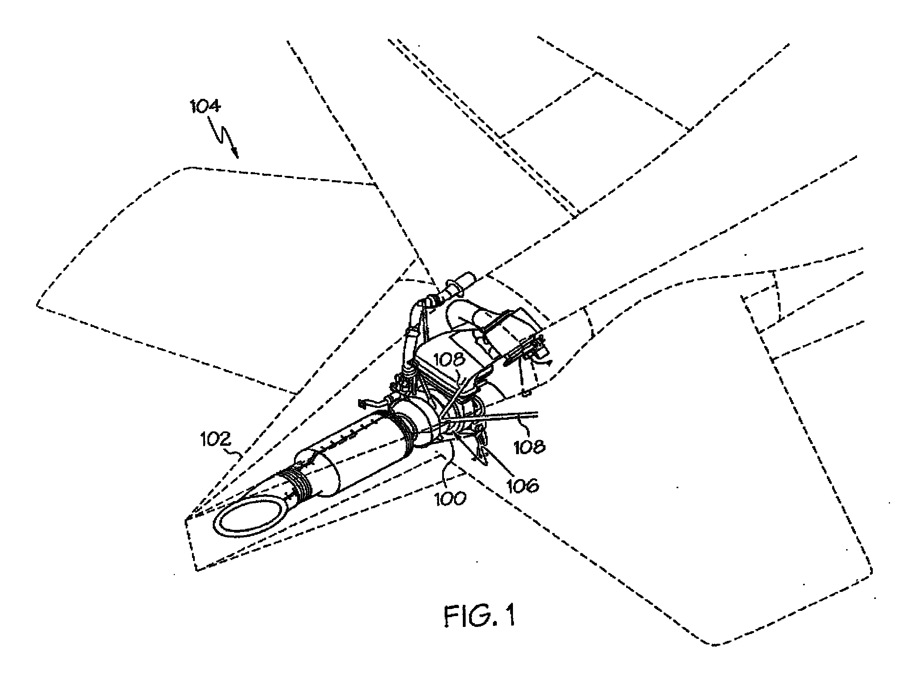

With reference now to FIG. 1, an exemplary auxiliary power unit ("APU") 100 is shown installed in a tailcone 102 of an aircraft 104. The APU 100 is mounted to an aircraft support structure (not shown) via a plurality of struts 108, and an APU mount system 106 within the tailcone 102.

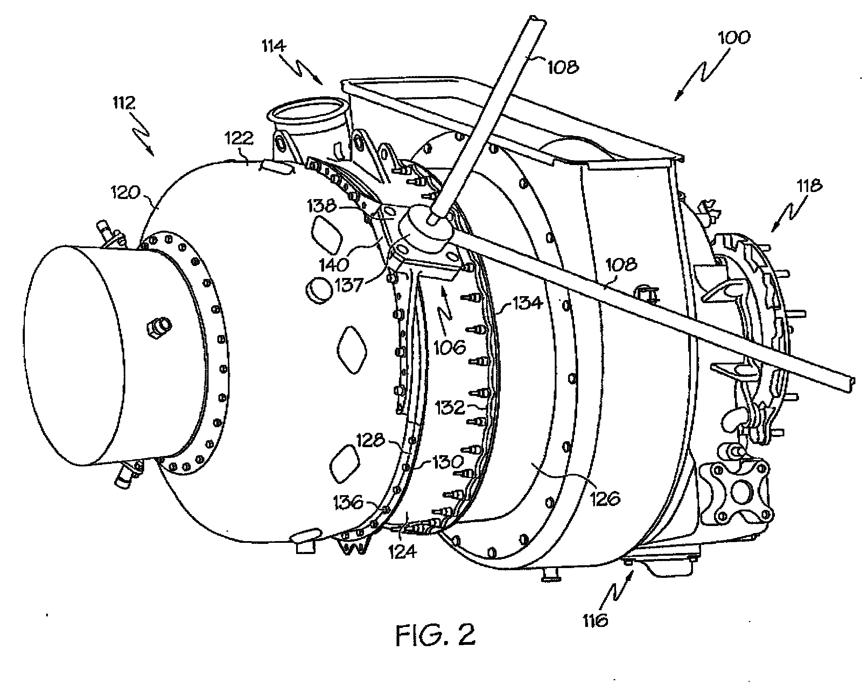

An isometric view of the APU 100 and the APU mount system 106 are provided in FIG. 2. The APU 100 includes a turbine/combustor section 112, a compressor section 114, an accessory gearbox 116, and an accessories section 118. The operation and configuration of each of these sections is generally well-known and will, therefore, not be further discussed. Each APU section is disposed within a housing 120 that itself includes several case sections 122, 124, 126 that are coupled together. Extending radially outward from the ends of each case section 122, 124, 126 are case flanges 128, 130, 132, 134. The case flanges 128, 130, 132, 134 each include a plurality of fastener openings, which may or may not be threaded. It will be appreciated that fastener openings of two adjacent case flanges, for example flanges 128 and 130 or flanges 132 and 134 are spaced such that they align with each other. Thus, when fasteners 136, such as threaded bolt and nut pairs, are inserted therethrough, the case sections 122, 124, 126 are coupled together.

The APU mount system 106 is coupled to at least one of the case flanges 128,130 and includes a finger mount adapter 137, a stud adapter 138, and a case mount adapter 140. The finger mount adapter 137 is configured to receive and retain ends of the struts 108 and may have any one of numerous conventionally used configurations. The stud adapter 138 is coupled between the finger mount adapter 137 and case mount adapter 140, and may additionally have any one of numerous conventionally used configurations.

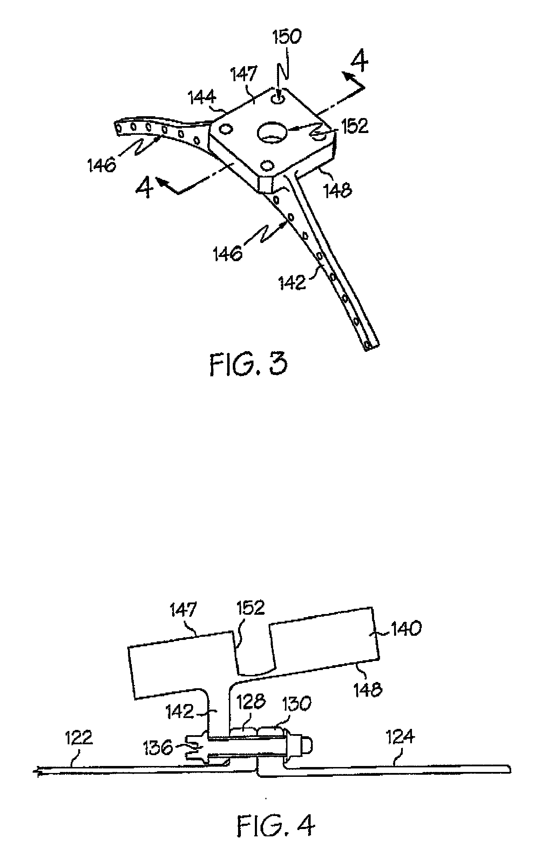

FIGs. 3 and 4 are a close-up view and a cross section view of an exemplary case mount adapter 140. The case mount adapter 140 provides a fire-resistant interface between the APU 100 and the strut 108. In this regard, the case mount adapter 140 is constructed from fire-resistant or fireproof material capable of carrying the loads required to support the APU while exposed to temperatures of up to 2,000°F. Suitable materials include, but are not limited to, stainless steel, nickel-base alloys, or titanium-base alloys. It will be appreciated that any one of numerous other fireproof materials may alternatively be employed.

The case mount adapter 140 is preferably a unitary component including at least one rib 142 and a mount plate 144 that are integrally formed with each other. The rib 142 is configured to mate with a case flange 128, and at least a portion of the rib 142 extends parallel thereto. Although described herein as being mounted to a particular case flange 128, it will be appreciated that the rib 142 may alternatively be configured to mount to other case flanges 130, 132, 134 instead. Additionally, the rib 142 includes a plurality of openings 146 that are disposed in a pattern such that at least selected ones correspond with one of the case flange fastener openings.

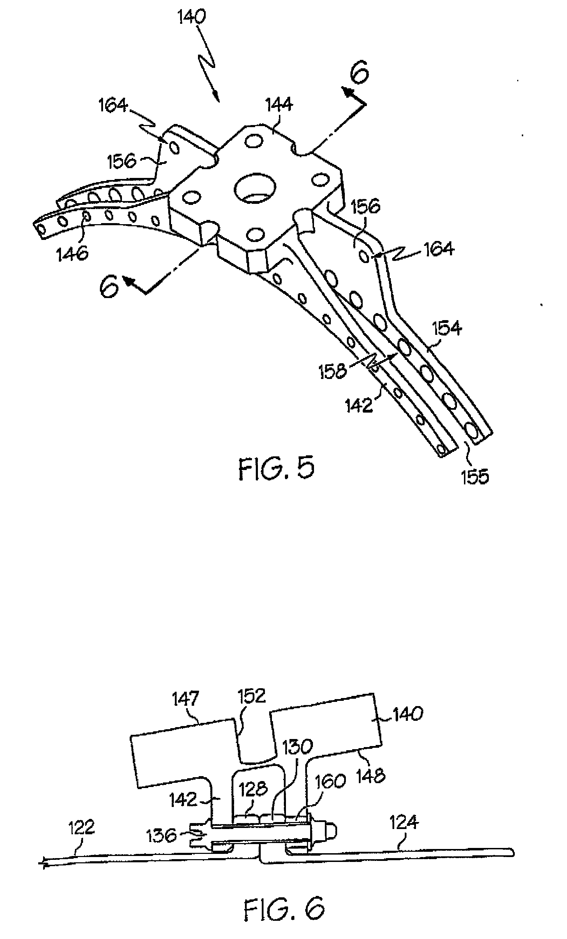

The mount plate 144 interfaces with the stud adapter 138 and therefore, may have any one of numerous suitable configurations. In one exemplary embodiment, and as shown in FIG. 3, tho mount plate 144 is square. Alternatively, as shown in FIG. 5, the mount plate 144 is a cloverleaf shape.

Returning to FIGs. 3 and 4, the mount plate 144 includes a first side 147, a second side 148, and a plurality of apertures 150 and is formed substantially in the middle of the rib 142. Depending upon the particular orientation of the struts 108 and APU 100, the mount plate 144 may be formed at an angle relative to the rib 142. In one exemplary embodiment, as shown in FIG. 3, the mount plate 144 is substantially perpendicular to the rib 142. In other embodiments, such as the embodiment shown in FIG. 4, the mount plate 144 is non-perpendicular to the rib 142.

The plurality of apertures 150 may extend between the plate first and second sides 147, 148, and each aperture 150 is appropriately sized and configured to receive a threaded fastener to fasten the stud adapter 138 to the mount plate 144. Preferably, the plurality of apertures 150 is disposed in a pattern such that each is collocated with an aperture on the stud adapter 138. A bearing hole 152 is formed substantially in the middle of the mount plate 144 to mate with a portion of the stud adapter 138.

In another exemplary embodiment of the mount adapter 140, as shown in FIGs. 5 and 6, a second rib 154 having hoist tabs 156 is included. The second rib 154 and boist tabs 156 are preferably formed integrally with the first rib 142 and mount plate 144, and thus, are constructed from fire-resistant or fireproof materials as well.

The second rib 154 extends substantially parallel to the first rib 142, and is suitably spaced apart therefrom to define a space 155 in which the case flanges 128,130 may fit. Preferably, the ribs 142,154 are spaced such that a close tolerance fit is provided when the case flanges 128,130 are disposed therebetween. To provide sufficient strength for the mount adapter 140 when coupled to the strut 108, the ribs 142,154 are preferably substantially similar in length.

Similar to the first rib 142, the second rib 154 includes a plurality of openings 158 that are disposed in a pattern such that at least selected ones correspond with one of the case flange fastener openings. Preferably, however, the second rib openings 158 are sized larger than the first rib openings 146. In one exemplary embodiment, the second rib openings 158 have a diameter suitable to retain plain bushings 160. The bushings 160 may be used for installing the fasteners 136 in the case flanges 128, 130 and for clamping the case flanges 128, 130 to each other.

With reference to FIG. 5, as briefly mentioned previously, the alternative mount adapter 140 additionally includes hoist tabs 156. The hoist tabs 156 provide supplementary support interfaces for the APU 100. Although the hoist tabs 156 are shown as being formed on the second rib 154, it will be appreciated that the tabs 156 may alternatively be formed on the first rib 142. Moreover, it will be appreciated that the hoist tabs 156 may be incorporated into an embodiment of the mount adapter 140 that includes only one rib 142.

The hoist tabs 156 preferably extend radially away from the second rib 154 and substantially perpendicular from the mount plate 144. It will be appreciated, however, that the hoist tabs 156 may be formed in any other sections of the rib 154 and, in other embodiments, may not be coupled to the mount plate 144. Preferably, the hoist tabs 156 include openings 164 that facilitate installation and removal of the APU 100 from the aircraft 104.

A fireproof mounting system has now been provided that is relatively lightweight and easy to install. The system can be configured to be installed on any conventional APU case flange and thus, may be retrofitted into any aircraft.

While the invention has been described with reference to a preferred embodiment, it will be understood by those skilled in the art that various changes may be made and equivalents may be substituted for elements thereof without departing from the scope of the invention. In addition, many modifications may be made to adapt to a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A mount adapter (140) configured to couple a case flange (128) of an auxiliary power unit (100) to a stud adapter (138), the case flange (128) having a plurality of spaced apart fastener openings formed therethrough, the mount adapter (140) comprising:
a first rib (142) having a portion configured to extend substantially parallel to at least a portion of the case flange (128), the first rib (142) including a plurality of openings (146) formed therethrough and disposed in a pattern such that at least selected ones correspond to one or more of the case flange fastener openings; and
a mount plate (144) having a first side (147) integrally formed on the first rib (142), a second side (148), and a plurality of apertures (150) extending therebetween;
wherein the first rib (142) and the mount plate (144) comprise fireproof material.

2. The mount adapter (140) of claim 1, wherein the fireproof material comprises a material selected from the group consisting of stainless steel, nickel-base alloy, and titanium-base alloy.

3. The mount adapter (140) of claim 1, further comprising:
a second rib (154) extending from the mount plate first side (147) and substantially parallel to the first rib (142), the second rib (154) including a plurality of openings (158) formed therethrough and disposed in a pattern such that at least selected ones correspond to one or more of the case flange fastener openings.

4. The mount adapter (140) of claim 3, wherein at least one of the openings of each of the second rib plurality of openings (158) is configured to receive a bushing therein.

5. The mount adapter (140) of claim 1, further comprising a hoist tab (156) integrally formed between the first rib (142) and the mount plate (144).

6. The mount adapter (140) of claim 1, wherein the hoist tab (156) extends from and is formed substantially perpendicular to the mount plate (144).
